# EUROPEAN PATENT SPECIFICATION

(11) **EP 2 096 347 B1**
(45) Date of publication and mention of the grant of the patent: **06.07.2011**
(21) Application number: 08151790.6
(22) Date of filing: 22.02.2008
(51) Int. Cl.: F16L 55/16

(54) **Method for joining together steel pipes for conveying fluids under pressure**
Verfahren zur Verbindung von Stahlrohren zur Druckförderung von Fluiden
Procédé pour raccorder des tuyaux d'acier pour le transport de fluides sous pression

(43) Date of publication of application: 02.09.2009
(73) Proprietor: HERA S.p.A., 40127 Bologna (IT)
(72) Inventor: Volta, Franco, I-40064, OZZANO EMILIA (IT); Gallerani, Diego, I-40128, BOLOGNA (IT)
(74) Representative: Porsia, Attilio

(56) References cited:
- CA-A1- 1 250 027
- DE-A1- 3 423 952
- DE-A1- 19 722 275
- DE-C1- 19 542 114
- DE-U1-202004 001 554
- US-A- 3 600 010
- US-B1- 6 241 424

## Description

The present invention relates to a method for joining together operative steel pipes for conveying fluids such as gas, water or the like.

As is known, in pipes for conveying fluids such as gas or water, it may happen that a section of the pipe must undergo maintenance or even be replaced in order to avoid the loss of fluid conveyed by the pipe or simply be removed in order to allow insertion in this pipe of a given connection piece, such as a branch-off piece, a pipe section, a valve or the like.

In the document DE 20 2004 001554U1 is described a repair kit consists of two heated coil reducing fittings and an intermediate piece. Two seals are let in on the inner side of the intermediate piece, and the reducing fittings are machined so that the large inside diameter conforms to the intermediate piece and the small inside diameter conforms to the existing pipe. During manufacture attention is paid to the material and pressure stages' uniformity.

In the document DE 197 22 275A1 is described a process for joining sections of plastic pipe and a corresponding welding collar for the pipes. These have the same diameter, and are involved especially in repair work. Ends to be connected are aligned together, with slight intervening clearance. An electrical welding collar bonds them. Prior sealing of the gap is carried out. The corresponding welding collar for the pipes is provided with external markings wich indicate axial lengths of pipes to be prepared and inserted. Degree of insertion and/or axial length to be covered by sealing band, is shown. The collar is an electric welding collar. Markings are integral to the collar, raised or depressed. Alternatively they may be added. They run around the circumference.

In the document DE 195 42 114C1 is descibed a a repair system for weldable plastic pipes, connects two ends together. It includes connectors for the ends, with heater windings to make welded joints. In this system, the connection is made by a tubular intermediate section and a pair of reducing collars. The intermediate section is placed over the tube ends. There are ring seals between the ends of the tubes and this section. The reducers have parts connecting to the pipe ends, and further parts connecting to the intermediate section. The reducing collar has a heater winding arranged in the first part to make the connection with the outer surface of the tube end. A second winding completes the joints with the intermediate section. The ID of the reducing collar allows it to be pushed axially onto the pipe. The larger ID of the collar matches the OD of the intermediate section, allowing it to be pushed on and to grip it. The ring seals are located internally, near the ends of the intermediate section, which is pushed on the pipes, such that the pipe gap is roughly central, and the seals are made, on either side. The open ends of the tube may be plugged, the plugs being removed, before pushing-on the intermediate section. The reducer collars grip the intermediate section and tube ends as described, the heater windings being used to effect pressure tight and/or fluid tight connections.

In the document CA1 250 027A1, which is considered to be the closest prior art, is described a process for joining together a pair of aligned end sections of steel pipe, internally filled with liquid, utilizing a cylindrical steel sleeve positioned over the junction between adjacent pipe ends and welded thereto by means of circumferential fillet welds, the improvement comprising: positioning a composite ring, comprising a body of heatinsulating, liquid-disintegratable material coated with a liquid-impermeable material which dissolves slowly in the pipe liquid, within each pipe end section and contiguous thereto, beneath the anticipated area of the circumferential fillet weld, whereby the rate of heat transfer from the weld and pipe end to the liquid in the pipe will be reduced during the welding process; fillet welding the sleeve ends to the pipe end sections with the insulating rings positioned therein; and subsequently disintegrating the rings in the liquid.

The operations, described in the cited documents, for the maintenance and repair of damaged pipes or for replacing a pipe section with a different tubular connection piece require the use of complex and costly means and/or operations since this gas or water conveying pipe is normally situated underground and the section to be replaced must, among other things, be isolated with interception of the fluid upstream and downstream thereof. Moreover, the use of the systems and processes described in the cited documents doesn't allow to join together pipe sections in which a new connection pipe may also be subject to a certain difference in diameter with respect to the existing pipe.

The object of the present invention is therefore to provide a method for joining together pipes for conveying fluids such as gas, water or the like, by means of which it is possible to repair in a simple, efficient and low-cost, but in particular reliable manner a damaged pipe section and restore normal operation thereof effectively or replace a pipe section with another connection piece such as a branch-off piece, a valve or the like. Moreover, by means of the method according to the present invention it is also possible the positioning of a new connection piece having a certain difference in diameter with respect to the existing pipe.

This object is achieved with the present invention by means of a method for joining together steel pipes for conveying fluids under pressure as claimed in claim 1.

Further characteristic features and advantages of the present invention will be understood more clearly from the following description considered by way of a nonlimiting example with reference to the accompanying drawings in which:
- Fig. 1 shows a side elevation view of a fluid-conveying pipe with a damaged section;
- Fig. 2 shows an elevation view of the pipe according to Fig. 1 provided, on the sides of the damaged section, with two fastening systems for the plugging machine and main stopper plugs;
- Fig. 3a shows a side elevation view of a first pipe section according to Fig. 1, in particular the section arranged on the left of the damaged and removed pipe section with the safety stopper inserted, which in the case shown is, for example, a mechanical expansion plug;
- Fig. 3b shows a side elevation view of a second section of the pipe according to Fig. 1, in particular the section arranged on the right of the damaged and removed pipe section with the safety stopper inserted, which in the case shown is, for example, a ball stopper;
- Fig. 4a shows the pipe section according to Fig. 3a where a first sliding sleeve has been mounted and the safety stopper removed, while the main stopper remains operative;
- Fig. 4b shows the pipe section according to Fig. 3b where a second sliding sleeve has been mounted and the safety stopper removed, while the main stopper remains operative;
- Fig. 5 shows the two pipe sections according to Fig. 4a and Fig. 4b between which a new pipe section has been inserted; and
- Fig. 6 shows a side elevation view on a larger scale of the new pipe section partially inserted inside these first and second sliding sleeves.

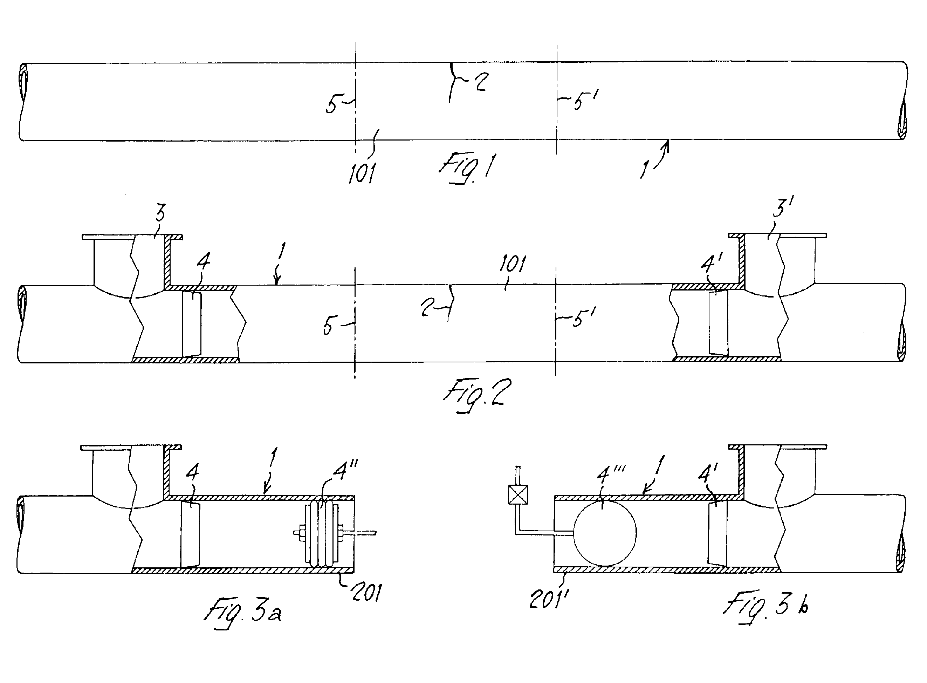

With reference to these accompanying drawings and in particular to Fig. 1 thereof, 1 denotes an operative steel pipe 1 for conveying fluids such as gas, water or the like. This pipe 1 contains a damaged section 101 in which, for example, a crack or breach 2 has formed.

This section 101 could also not be damaged and the operation on the pipe 1, which is to be performed according to the present method, could be envisaged in order to replace this section 101 with a branch-off piece, a union or other tubular part for conveying fluids.

Fig. 2 shows the pipe 1 in which two tubular fastening elements 3 and 3' for the stopper plug insertion system have been welded upstream and downstream of the breach 2 along the section 101, said elements being positioned transversely with respect to said pipe 1. The fastening system shown here is of the flanged type and has the same diameter as the pipe. However there exist different types of fluid plugging systems with different systems for performing fastening onto the pipes, and so the system shown has been provided purely by way of example and has the function of illustrating application of the sleeve. Two stopper plugs 4 and 4' are inserted inside this pipe 1, by means of these tubular elements 3 and 3' and are also positioned upstream and downstream of said breach 2 so as to interrupt the fluid flow inside the pipe 1 and isolate the section 101 which is damaged or which in any case must be replaced.

Fig. 3a shows a first section 201 of the pipe 1, in particular the section situated on the left when viewing Figs. 1 and 2, with the plug 4 inside it. The safety stopper 4" has been inserted at the end of the pipe section 201 and in the case shown is, for example, a mechanical expansion plug.

Fig. 3b shows similarly a second section 201' of the pipe 1, in particular the section situated on the right when viewing Figs. 1 and 2. The safety stopper 4'" has been inserted at the end of the pipe section 201' and in the case shown is, for example, a ball stopper.

These pipe sections 201 and 201' are obtained by removing the damaged pipe section 101, for example along the dot-dash lines 5 and 5' shown in Figs. 1 and 2. These sections 201 and 201' are normally aligned with their two free ends directed towards each other, even though in some cases the stresses from the ground which are transmitted to the pipe at the time of cutting of the pipe may cause a slight misalignment of the free ends. At this point, after fitting further safety plugs 4" and 4"' to the ends of the sections, an annular chamfer 6 and 6' is formed externally on each part, i.e. on the end of the section 201 and the end of the section 201', respectively.

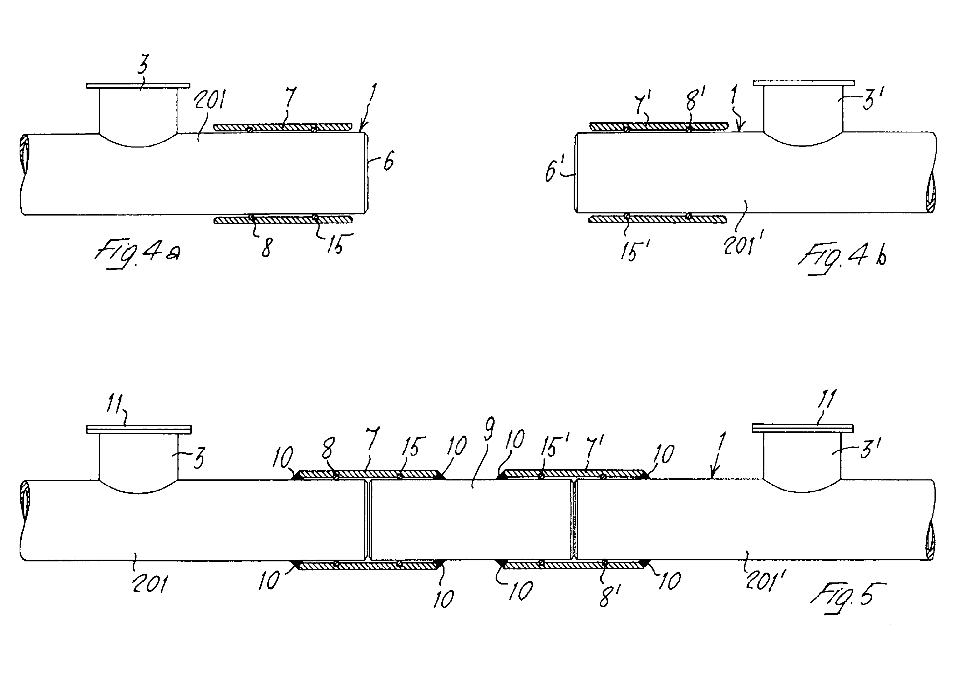

Fig. 4a shows the step where, after the safety plugs have been removed, a first sliding sleeve 7 provided with at least two sealing rings 8 and 15 has been mounted on the pipe section 201 via the end with the annular chamfer 6. Similarly (see Fig. 4b) a second sliding sleeve 7' provided with the two associated sealing rings 8' and 15' is mounted on the pipe section 201'.

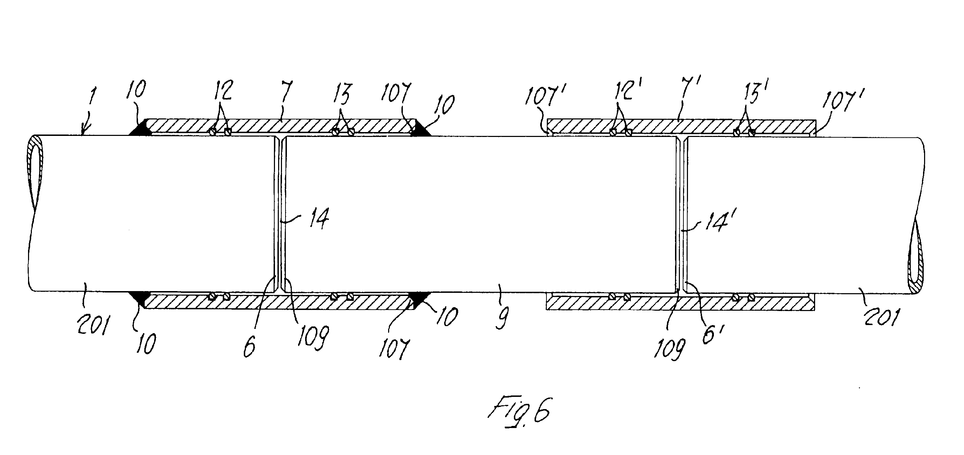

Fig. 5 shows the pipe 1 at the end of the maintenance operation according to the present method, which will be described in detail below. A new pipe section 9 is positioned between the free ends with annular chamfers 6 and 6' of the two pipe sections 201 and 201', said section also having its ends previously chamfered so as not to damage the seals during the sliding movement. The length of the new pipe section may be smaller than that of the pipe section removed since the difference in length is taken up by the distance between the sealing points of the seals 8 and 15 and 8' and 15' on the sleeve itself. Moreover the diameter of the new section may also be subject to a certain tolerance with respect to the existing pipe since the double seat of the seal with varying depths indicated in Fig. 6, by the point 12 and 13 and 12' and 13', allows prior locating of the most suitable position for the O-ring; it is envisaged moreover being able to produce sleeves which are dimensionally modified in order to connect together significantly different diameters while respecting obviously the present procedure with the sole constraint of positioning the sleeves on the smaller-diameter pipe section and then displacing it onto the larger-diameter section. The thickness of the pipe wall and therefore the internal diameter are of no significance. The ends of this new pipe section 9 face the annular chamfers 6 and 6' of the two pipe sections 201 and 201' and the sliding sleeves 7 and 7' are displaced, with respect to that shown in Figs. 4a and 4b, towards said new pipe section 9, so that the outermost sealing rings 8 and 8' of the two sealing sleeves 7 and 7' embrace the outer surface of the associated pipe sections 201 and 201', while the innermost sealing rings 15 and 15' of said sleeves embrace the outer surface of said new pipe section 9. These sleeves 7 and 7' are fixed to the associated pipe section 201 and 201' and to the new pipe section 9 by means of welds 10, which are provided at the ends thereof. As can be seen, moreover, the tubular elements 3 and 3' are closed by means of associated lids 11 and 11', obviously after removal of the plugs 4 and 4' shown in Figs. 2, 3a and 3b.

As mentioned above, in place of this new pipe section 9 it would be possible to insert between said pipe sections 201 and 201' also a branch-off piece, a valve or other tubular part for conveying fluids, depending on the specific requirements.

Fig. 6 shows, on a larger scale, the new pipe section 9 partially inserted inside the two sliding sleeves 7 and 7'. Each of these sleeves 7 and 7' (see for example the sleeve 7) comprises internally two pairs 12 and 13 of sealing rings: the first pair 12 of sealing rings is positioned around the pipe section 201, while the second pair is positioned around the pipe section 9. Similarly the pair 12' of sealing rings of the sleeve 7' is positioned around the pipe section 201', while the pair 13' of sealing rings is positioned around the pipe section 9. Annular chamfers 107 and 107' are formed internally at both the ends of each of these sleeves 7 and 7' in order to facilitate sliding thereof on the new pipe section 9 and on the two sections 201 and 201'. This new pipe section 9 also has externally at each end annular chamfers 109 and 109' which face, respectively, the annular chamfer 6 of the pipe section 201 and the annular chamfer 6' of the pipe section 201'. The purpose of these chamfers 109 and 109' is to safeguard the pairs 13 and 13' of sealing rings of the two sleeves 7 and 7' during sliding thereof on the new pipe section 9. In the figure, finally, it is possible to see the welds 10 by means of which the ends of the sleeve 7' are fixed to the pipe section 201', and similar welds, which are not shown in Fig. 6 for the sake of clarity of illustration, are envisaged for the sliding sleeve 7 of the section 201. It is possible to envisage a certain spacing gap 14 and 14' between the ends of the annular chamfers 6 and 6' of the two sections 201 and 201' and the ends of the new pipe section 9.

The various steps of the present method for joining together fluid conveying pipes are now described. Considering the pipe 1 in Fig. 1 which has the damaged section 101 owing to the presence, for example, of a breach 2, firstly the outer sheathing normally provided on a fluid conveying pipe is removed and then the outer diameter of the pipe 1 is measured at four diametrically opposite points in order to check for any ovalization of the pipe. In the case where there is a significant degree of ovalization, for example greater than 2 mm, it is necessary to reduce it to a lower value. The appropriate sliding sleeve 7 and 7' is identified and the two sealing rings 8, 15, 8', 15' or pairs 12, 12' and 13, 13' of sealing rings are inserted inside it. The tubular connecting elements 3 and 3' are then fixed (see Fig. 2) upstream and downstream of the damaged section 101 of the pipe 1. By means of these tubular connecting elements 3 and 3', it is possible to insert in the pipe 1 two stopper plugs 4 and 4' and then perform cutting of the pipe along the lines 5 and 5', thereby obtaining (see Figs. 3a and 3b) two pipe sections 201 and 201', the free ends of which are machined externally so as to obtain annular chamfers 6 and 6', in order to allow easier mounting of the sliding sleeves 7 and 7' and the sealing rings with which they are provided. These sleeves 7 and 7' (see Figs. 4a and 4b) are initially mounted completely onto the associated pipe sections 201 and 201'. The stopper plugs 4 and 4' are then extracted and then (see Fig. 5) the new pipe section 9 is positioned between the ends with annular chamfers 6 and 6' of the two sections 201 and 201', ', so that it is aligned horizontally and vertically with them. The ends of this new pipe section 9 are already provided with annular chamfers 109 and 109' and are already lubricated.

At this point the sleeves 7 and 7', which are positioned as shown in Figs. 4a and 4b, are slid towards said new pipe section 9 until the latter is at least partially inserted inside them, as shown in Figs. 5 and 6. As mentioned in connection with Fig. 6, it is possible to envisage a certain spacing gap 14 and 14' between the free ends of the pipe sections and the ends of the new pipe section. At this point, the alignment of the new section 9 with the two pipe sections 201 and 201' is checked as accurately as possible and the various parts are fixed together by means of the angle welds 10 at the ends of the sleeves 7 and 7', as shown in Figs. 5 and 6.

## Claims

1. Method for joining together steel pipes for conveying fluids under pressure, comprising the following steps:
a) identifying a pipe section (101) to be replaced and intercepting, by means of creation of suitable points for fastening stopper systems (4, 4'), the fluid flow inside the pipe (1) upstream and downstream of this pipe section (101);
b) after the fluid flow has been intercepted, removing the pipe section (101) to be replaced so as to obtain upstream and downstream thereof two pipe sections (201, 201');
c) inserting at the end of each pipe section (201, 201') protective stopper means (4", 4"'), chamfering the edges of the sections and then mounting on each pipe section (201,201') a respective sliding sleeve (7, 7') comprising internally two pairs (12, 13, 12', 13') of sealing rings;
d) removing the protective stoppers (4", 4"') from the pipe sections (201, 201') and positioning between them a new connection piece (9), such as a pipe section, a branch-off piece, a valve or the like;
e) displacing the sliding sleeves (7, 7') on these pipe sections (201, 201') so that the first pair (12, 12') of sealing rings is positioned around the associated pipe section (201, 201'), while the second pair (13, 13') is positioned around the new connection piece (9);
f) fixing these sliding sleeves (7, 7') to these pipe sections (201, 201') and to this connection piece (9).

2. Method according to Claim 1, **characterized in that** said sealing rings are positioned in a double seat with varying depths.

3. Method according to Claim 1, **characterized** furthermore in that, during said step a), tubular connecting elements (3, 3') are fixed to the sleeve of the pipe (1), upstream and downstream of said pipe section (101) to be replaced, so as to allow the insertion inside it of at least one stopper plug (4, 4') situated upstream and downstream of said pipe section (101) to be replaced, so as to intercept the flow in the pipe 1.

4. Method according to Claim 1, **characterized in that** annular chamfers (107, 107') are formed internally at both the ends of each of said sleeves (7, 7').

5. Method according to Claim 1, **characterized in that**, during step c), said sliding sleeves (7, 7') are mounted completely on the associated pipe section (201, 201').

6. Method according to Claim 1, **characterized in that**, prior to said step a), any excessive ovalization of the pipe (1) is checked and if necessary corrected.

7. Method according to Claim 1, **characterized in that** annular chamfers (6, 6') are formed externally on the free ends of said pipe sections (201, 201') obtained according to step b).

8. Method according to Claim 1, **characterized in that** the ends of said new connection piece (9) are lubricated and annular chamfers (109, 109') are formed on the outside thereof.

9. Method according to Claim 1, **characterized in that**, during said positioning step d), said new connection piece (9) is aligned horizontally and vertically with said pipe sections (201, 201').

10. Method according to Claim 1, **characterized in that** said sliding sleeves (7, 7') positioned on the pipe sections (201, 201') and on the new connection piece (9) are fixed to the outer surfaces thereof by means of welds (10).

## Patentansprüche

1. Verfahren zum Verbinden von Stahlrohren zum Fördern von Fluiden unter Druck mit den folgenden Schritten:
a) Identifizieren eines zu ersetzenden Rohrabschnitts (101) und Unterbrechen des Fluidflusses innerhalb des Rohres (1) stromaufwärts und stromabwärts dieses Rohrabschnitts (101) mit Hilfe einer Bildung von geeigneten Punkten zum Befestigen von Stopfensystemen (4, 4'),
b) nachdem der Fluidfluss unterbrochen wurde, Entfernen des zu ersetzenden Rohrabschnitts (101), so dass stromaufwärts und stromabwärts davon zwei Rohrabschnitte (201, 201') erhalten werden,
c) Einfügen an dem Ende jedes Rohrabschnitts (201, 201') Schutzstopfenmittel (4", 4"'), die die Kanten der Abschnitte bestoßen und dann Befestigen einer entsprechenden gleitenden Hülse (7, 7') an jedem Rohrabschnitt (201, 201'), die im Inneren zwei Paare (12, 13, 12', 13') von Dichtringen aufweist,
d) Entfernen der Schutzstopfen (4", 4"') von den Rohrabschnitten (201, 201') und Anordnen eines neuen Verbindungsstücks (9), wie z. B. einem Rohrabschnitt, einem Abzweigstück, einem Ventil oder ähnlichen, zwischen diesen,
e) Verschieben der gleitenden Hülsen (7, 7') auf diesen Rohrabschnitten (201, 201'), so dass das erste Paar (12, 12') von Dichtringen um den zugeordneten Rohrabschnitt (201, 201') angeordnet ist, während das zweite Paar (13, 13') um das neue Verbindungsstück (9) angeordnet ist,
f) Befestigen dieser verschiebbaren Hülsen (7, 7') an diesen Rohrabschnitten (201, 201') und an diesem Verbindungsstück (9).

2. Verfahren nach Anspruch 1, **dadurch gekennzeichnet, dass** die Dichtringe in einem doppelten Sitz mit verschiedenen Tiefen angeordnet sind.

3. Verfahren nach Anspruch 1, darüber hinaus **dadurch gekennzeichnet, dass** während dem Schritt a) rohrförmige Verbindungselemente (3, 3') an der Hülse des Rohrs (1) stromaufwärts und stromabwärts von dem zu ersetzenden Rohrabschnitt (101) befestigt werden, so dass das Einfügen mindestens eines Stopfens (4, 4'), der stromaufwärts und stromabwärts von dem zu ersetzenden Rohrabschnitt (101) angeordnet ist, innerhalb davon ermöglicht wird, um den Fluss in dem Rohr (1) zu unterbrechen.

4. Verfahren nach Anspruch 1, **dadurch gekennzeichnet, dass** ringförmige Fasen (107, 107') im Inneren an beiden Enden jeder der Hülsen (7, 7') gebildet werden.

5. Verfahren nach Anspruch 1, **dadurch gekennzeichnet, dass** während Schritt c) die gleitenden Hülsen (7, 7') vollständig auf dem zugeordneten Rohrabschnitt (201, 201'), befestigt werden.

6. Verfahren nach Anspruch 1, **dadurch gekennzeichnet, dass** vor dem Schritt a) jedwede übermäßige Ovalisierung des Rohrs (1) überprüft wird und wenn notwendig korrigiert wird.

7. Verfahren nach Anspruch 1, **dadurch gekennzeichnet, dass** ringförmige Fasen (6, 6') außerhalb an den freien Enden der Rohrabschnitte (201, 201'), die gemäß Schritt b) erhalten werden, gebildet werden.

8. Verfahren nach Anspruch 1, **dadurch gekennzeichnet, dass** die Enden des neuen Verbindungsstücks (9) abgeschmiert werden und ringförmige Fasen (109, 109') auf dem Äußeren davon gebildet werden.

9. Verfahren nach Anspruch 1, **dadurch gekennzeichnet, dass** während dem Positionierschritt d) das neue Verbindungsteil (9) horizontal und vertikal mit den Rohrabschnitten (201, 201') ausgerichtet wird.

10. Verfahren nach Anspruch 1, **dadurch gekennzeichnet, dass** die auf den Rohrabschnitten (201, 201') und auf dem neuen Verbindungsstück (9) angeordneten gleitenden Hülsen (7, 7') an den äußeren Oberflächen davon mit Hilfe von Schweißnähten (10) befestigt werden.

## Revendications

1. Procédé destiné à raccorder des tuyaux en acier afin d'acheminer des fluides sous pression, comprenant les étapes consistant à:
a) identifier une section de tuyau (101) à remplacer et intercepter, au moyen de la création de points appropriés destinés à la fixation de systèmes d'arrêt (4, 4'), l'écoulement de fluide à l'intérieur du tuyau (1) en amont et en aval de cette section de tuyau (101),
b) après avoir intercepté l'écoulement de fluide, retirer la section de tuyau (101) à remplacer de manière à obtenir deux sections de tuyau (201, 201') en amont et en aval de celle-ci,
c) insérer au niveau de l'extrémité de chaque section de tuyau (201, 201') un moyen d'arrêt protecteur (4", 4"'), chanfreiner les bords des sections et ensuite monter sur chaque section de tuyau (201, 201') un manchon coulissant respectif (7, 7') comprenant à l'intérieur deux paires (12, 13, 12', 13') de joints d'étanchéité,
d) retirer les moyens d'arrêt protecteurs (4", 4"') des sections de tuyau (201, 201') et positionner entre ceux-ci une nouvelle pièce de raccord (9), telle qu'une section de tuyau, une pièce de ramification, une vanne ou similaires,
e) déplacer les manchons coulissants (7, 7') sur ces sections de tuyau (201, 201') de telle sorte que la première paire (12, 12') de joints d'étanchéité est positionnée autour de la section de tuyau associée (201, 201'), alors que la deuxième paire (13, 13') est positionnée autour de la nouvelle pièce de raccord (9),
f) fixer ces manchons coulissants (7, 7') à ces sections de tuyau (201, 201') et à cette pièce de raccord (9).

2. Procédé selon la revendication 1, **caractérisé en ce que** lesdits joints d'étanchéité sont positionnés dans un double support présentant des profondeurs variables.

3. Procédé selon la revendication 1, **caractérisé en outre en ce que**, au cours de ladite étape a), des éléments de raccordement tubulaires (3, 3') sont fixés au manchon du tuyau (1), en amont et en aval de ladite section de tuyau (101) à remplacer, de façon à permettre l'insertion à l'intérieur d'au moins un bouchon d'arrêt (4, 4') situé en amont et en aval de ladite section de tuyau (101) à remplacer, de manière à intercepter l'écoulement dans le tuyau 1.

4. Procédé selon la revendication 1, **caractérisé en ce que** des chanfreins annulaires (107, 107') sont formés à l'intérieur au niveau des deux extrémités de chacun desdits manchons (7, 7').

5. Procédé selon la revendication 1, **caractérisé en ce que**, au cours de l'étape c), lesdits manchons coulissants (7, 7') sont montés complètement sur la section de tuyau associée (201, 201').

6. Procédé selon la revendication 1, **caractérisé en ce que**, avant ladite étape a), l'absence de toute ovalisation excessive du tuyau (1) est vérifiée et si nécessaire l'ovalisation est corrigée.

7. Procédé selon la revendication 1, **caractérisé en ce que** les chanfreins annulaires (6, 6') sont formés à l'extérieur sur les extrémités libres desdites sections de tuyau (201, 201') obtenues conformément à l'étape b).

8. Procédé selon la revendication 1, **caractérisé en ce que** les extrémités de ladite nouvelle pièce de raccord (9) sont lubrifiées et les chanfreins annulaires (109, 109') sont formés sur le côté extérieur de celle-ci.

9. Procédé selon la revendication 1, **caractérisé en ce que**, au cours de ladite étape de positionnement d), ladite nouvelle pièce de raccord (9) est alignée horizontalement et verticalement par rapport auxdites sections de tuyau (201, 201').

10. Procédé selon la revendication 1, **caractérisé en ce que** lesdits manchons coulissants (7, 7') positionnés sur les sections de tuyau (201, 201') et sur la nouvelle pièce de raccord (9) sont fixés sur les surfaces extérieures de celles-ci au moyen de soudures (10).
